# EUROPÄISCHE PATENTSCHRIFT

(11) **EP 1 921 525 B1**
(45) Veröffentlichungstag und Bekanntmachung des Hinweises auf die Patenterteilung: **08.06.2016**
(21) Anmeldenummer: 06023103.2
(22) Anmeldetag: 07.11.2006
(51) Int. Cl.: G05B 19/042

(54) **Verfahren zum Betrieb einer sicherheitsgerichteten Anlage**
Method for operating a security related system
Méthode d'opération d'un système de sécurité

(43) Veröffentlichungstag der Anmeldung: 14.05.2008
(73) Patentinhaber: Siemens Aktiengesellschaft, 80333 München (DE)
(72) Erfinder: Barthel, Herbert, 91074 Herzogenaurach (DE)

(56) Entgegenhaltungen:
- EP-A- 1 605 695
- US-A- 5 970 148
- US-A1- 2005 283 295

## Beschreibung

Die Erfindung betrifft ein Verfahren, eine Anlagenkomponente und eine zentrale sicherheitsgerichtete Einheit zum Betrieb einer sicherheitsgerichteten Anlage.

In der modernen Automatisierungswelt wird heutzutage ebenso wie normale verteilte Automatisierung zunehmend auch sicherheitsgerichtete verteilte Automatisierung realisiert. Dabei werden die einzelnen sicherheitsgerichteten Anlagenkomponenten zum Schutz von Menschen, wie beispielsweise ein Lichtgitter oder eine Schutztür, unabhängig voneinander getestet und in Betrieb genommen.

Für die Inbetriebnahme einer sicherheitsgerichteten Anlage müssen dabei bestimmte sicherheitstechnisch erforderliche 0-berwachungen ausgeschaltet werden. Dies ist erforderlich um Parametereintellungen und Tests der jeweiligen Komponenten zu ermöglichen.

Während dieses Testbetriebs einer sicherheitsgerichteten Automatisierungsanlage bzw. der einzelnen Komponenten darf der Betrieb nur im so genannten "beobachteten Betrieb" der Anlage sein. Er muss also unter Aufsicht erfolgen, damit der Anlagenfahrer eingreifen kann, falls etwas außer Kontrolle gerät. D.h. während der Dauer der Inbetriebnahme einer sicherheitsgerichtete Automatisierung muss die Automatisierung bzw. das Automatisierungssystem und die Anlage von einem oder mehrerer Menschen beobachtet/überwacht werden. Dies nennt man den beobachteten Betreib. Nach Beendigung der Inbetriebnahme darf die Anlage in den vollautomatischen Betrieb übergehen, wenn alle Automatisierungskomponenten ihren Testbetrieb verlassen haben.

Hierbei können insbesondere in einer sicherheitstechnischen Anlage gefährliche.Zustände eintreten, wenn eine der sicherheitsgerichteten Komponenten versehentlich noch im Inbetriebnahmemodus bzw. Testbetrieb arbeitet, obwohl die Anlage bereits komplett sicherheitsgerichtet von der Automatisierung bzw. dem Automatisierungssystem gesteuert oder geregelt wird.

Da die Automatisierung verteilt ist, ist schwer zu erkennen wenn sich ein Gerät oder eine sicherheitsgerichtete Anlagenkomponente noch im Inbetriebnahmemodus oder im Testbetrieb befindet.

Anhand einiger Beispiele wird erläutert, warum der Testbetrieb bzw. Inbetriebnahmemodus auch bei sicherheitsgerichteten Anlagen erforderlicht ist und für einzelne Komponenten unabhängig vom Betrieb der gesamten Anlage erfolgen muss:

Eine Schutztür soll eingerichtet werden. Um die Funktion der doppelten Schutztürkontakte zu prüfen, ist es zum einen erforderlich, dass die sicherheitsgerichtete Steuerung die Signale der Kontakte einliest, aber bei Diskrepanz der Signale nicht sofort die gesamte Anlage abschaltet, da dann das Zusammenspiel der Anlage mit der Schütztüre nicht getestet werden kann.

Ein Lichtgitter soll so eingerichtet werden, dass es eine menschliche Hand von den Werkstücken unterscheiden kann. Während dieser Einrichtung soll die übrige Anlage bereits sicherheitsgerichtet arbeiten, da nur dieser Automatisierungsteil beobachtet wird. Damit die übrige Anlage arbeiten kann wird das Lichtgitter während der Inbetriebnahme in den Testbetrieb geschaltet.

Gefährlich wird es dann wenn die Schutztürkontakte oder das Lichtgitter im Inbetriebnahmemodus bleiben obwohl der Anlagenfahrer denkt, dass alle sicherheitsgerichteten Komponenten bzw. Geräte den Sicherheitsbetrieb (auch Automatikbetrieb genannt) aufgenommen haben.

US5970148 offenbart ein System zur erhöhung der Sicherheit eines passiven Transponders, wobei eine ermittelte Signatur mit eine Referenz-Signatur verglichen wird und, bei Identität, eine Sicherheitsfunktion freigegeben wird.

Bisher gibt es keinen eigenen Testbetrieb für eine verteilte sicherheitsgerichtete Automatisierungs-Anlage. Nur ein Testbetrieb einzelner Komponenten ist möglich. Hierbei muss der Anlagenbetreiber durch einzelne Sichtprüfung aller sicherheitsgerichteten Komponenten bzw. Geräte vor Ort überprüfen, ob die Komponenten bzw. Geräte sich im Sicherheitsbetrieb bzw. Automatikbetrieb befinden. Entweder zeigt eine Komponente dies optisch an, oder es muss eine Kommunikations-Verbindung zwischen dem komponentenspezifischen Tool bzw. der Anwendung, z.B. einer Software auf einem Labtop, und der Komponente hergestellt werden. Die Software zeigt dann an ihrer Benutzeroberfläche den Betriebzuständ an.

Die Aufgabe der Erfindung besteht daher darin, ein Verfahren und entsprechende Automatisierungsgeräte anzugeben, welche eine sichere Inbetriebnahme und einen sicheren Betrieb sicherheitsgerichteter Komponenten eines verteilten Automatisierungssystems ermöglichen.

Die Aufgabe wird erfindungsgemäß durch die Gegenstände der Ansprüche 1 und 9 sowie durch das Verfahren des Anspruchs 14 gelöst.

Der Erfindung liegt die Erkenntnis zugrunde, dass eine Signatur, die von einer sicherheitsgerichteten Komponente nach deren Inbetriebnahme erstellt wird, mit einer zweiten, in einer zentralen sicherheitsgerichteten Einheit, beispielsweise einer Steuerung, hinterlegten Signatur verglichen und auf Gleichheit überprüft werden kann und daraus für das Automatisierungssystem erkennbar ist, in welchem Betriebszustand die entsprechende sicherheitsgerichtete Anlagenkomponente sich befindet. Für die Inbetriebnahme der einzelnen Komponenten werden diesen hierbei erstmal Defaultwerte für die Signaturen zugewiesen, die einen Testbetrieb signalisieren. Hierbei ist ein Defaultwert ein vom System voreingestellter Wert, der geändert werden kann.

Die Erfindung macht sich dabei zunutze, dass heutzutage jedes sicherheitsgerichtete Gerät bzw. jede sicherheitsgerichtete Anlagenkomponente für den während der Inbetriebnahme eingestellten Parametersatz, für den Sicherheitsbetrieb, eine Signatur (Prüfschlüssel, z.B. CRC-Wert) bereitstellen muss. Diese Signatur wird vom Anlagenabnehmer (z.B. TÜV oder BIA) notiert, um später nachprüfen zu können ob im Falle eines Unfalles an den Parametern manipuliert wurde. Gleichzeitig nutzt das sicherheitsgerichtete Gerät bzw. die sicherheitsgerichtete Anlagenkomponente diese Signatur, um zu prüfen, ob sich durch einen Hardware- oder Softwarefehler die Parameter geändert haben.

Der Pärametersatz des Geräts bzw. der Komponente wird während der Inbetriebnahme von einem Inbetriebnahmetool per Kommunikation in das Gerät bzw. die Komponente gebracht.

Hierbei kennt jedes Gerät bzw. Komponente zumindest zwei Betriebsarten:

Den Sicherheitsbetrieb (auch Prozessbetrieb oder Automatikbetrieb der Anlage) und den Fail-Safe-Betrieb. Im letzteren geht das Gerät bzw. die Komponente in den sicheren Zustand über. Für jede Anlage wird der sichere Zustand speziell definiert. Typischerweise ist Stop der sichere Zustand (Beispiele: Antrieb geht in Stop, Sensor zeigt "0"-Werte an).

Neuere sicherheitsgerichtete Geräte bzw. Komponenten kennen als dritte Betriebsart noch den Testbetrieb (auch Einrichtbetrieb oder Inbetriebnahmemodus).

Erfindungsgemäß wird nun eine geräte- bzw. komponentenspezifische Signatur A und B definiert:

Die Signatur A ist dabei die heute bekannte Signatur die jedes Gerät auf Basis der Parameter für sich ermittelt. Die Signatur B ist erfindungsgemäß die neue Signatur, die in der zentralen sicherheitsgerichteten Einheit (bsp. einer sicherheitsgerichteten speicherprogrammierbaren Steuerung) hinterlegt wird.

Für den Automatikbetrieb müssen diese beiden Signaturen identisch sein. Das Gerät bzw. die Komponente überprüft, ob die Signaturen identisch sind. Wenn ja, dann kann es den Sicherheitsbetrieb (Automatikbetrieb) aufnehmen.

Der Defaultwert der Signatur B wird beispielsweise als "0" definiert um zu erkennen, dass noch kein richtiger Wert eingestellt wurde. Wenn die Signaturberechnung der Signatur A zufällig den Wert "0" ermittelt, dann wird durch eine definierte arithmetische Operation (z.B. +1) der Wert auf einen Wert ungleich 0 gesetzt. Somit ist der Signaturwert A immer ungleich 0.

Eine andere Belegung des Defaultwertes ist ebenso möglich, beispielsweise eine negative Zahl. Eine entsprechende Sicherstellung, dass der ermittelte Signaturwert A nicht dem Defaultwert entspricht wird in solchem Fall angepasst erfolgen.

Der Inbetriebnehmer gibt über ein Test- und Inbetriebnahme Tool bzw. eine Softwareanwendung den Befehl "Testbetrieb einnehmen" an das Gerät bzw. die Komponente. Hierbei kann das Test- und Inbetriebnahme Tool geräte- bzw. komponentenspezifisch sein. In der Regel handelt es sich um eine spezielle Anwendung, die im Rahmen eines Inbetriebnahme- und Engineeringsystems läuft.

Sobald der Inbetriebnehmer mit der Inbetriebnahme des Gerätes bzw. der sicherheitsgerichteten Komponente fertig ist, lässt er den Signaturwert A ermitteln, und gibt den Befehl an das Gerät bzw. die Komponente "Testbetrieb ausschalten" bzw. "Sicherheitsbetrieb" einnehmen.

Dieser ermittelte Signaturwert A wird der zentralen sicherheitsgerichteten Einheit, der Steuerung, mitgeteilt. Die Steuerung speichert diesen Signaturwert, als Signaturwert B.

Gleichzeitig sendet die Steuerung den Signaturwert Zu zum Gerät bzw. zur sicherheitsgerichteten Komponente. Die erfolgt in der Regel über eine Kommunikationsverbindung wie ein industrieller Bus oder ein industrielles Ethernet.

Das sicherheitsgerichtete Gerät bzw. die sicherheitsgerichtete Komponente darf nur solange im Testbetrieb bleiben (oder den Testbetrieb aufnehmen), solange der Signaturwert B dem Defaultwert entspricht, in dem genannten Beispiel = 0.

Sobald der Signaturwert B ungleich 0 ist, prüft das Gerät bzw. die Komponente, ob die Signaturen A und B gleich sind, wenn ja kann es/sie den Prozessbetrieb (Sicherheitsbetrieb, Automatikbetrieb) einnehmen. Ansonsten muss es im Fail-Safe-Betrieb bleiben.

Im Rahmen eines Automatisierungssystems einer verteilten sicherheitsgerichteten Anlage werden alle sicherheitsgerichteten Komponenten auf diese weise in Betrieb genommen und betrieben. Die zentrale Steuerung oder mehrere Steuerungen, die für bestimmte Anlagenteile verantwortlich sind, bekommt / bekommen die Signaturen der einzelnen, ihnen zugeordneten sicherheitsgerichteten Komponenten bzw. Geräte. Wenn nun die Steuerung die Anlage in den Sicherheitsbetrieb schalten soll, überprüft sie, ob.alle Signaturen B der einzelnen, ihr zugeordneten verteilten Komponenten ungleich 0 sind. Wenn ja dann kann sie den Sicherheitsbetrieb aufnehmen, ansonsten muss die Anlage im beobachteten Betrieb bleiben.

Bei der vorliegenden Erfindung ist insbesondere die Einführung einer Kennung bzw. Signatur, anhand der eine zentrale sicherheitsgerichtete Steuerung unterscheiden kann, ob ein Gerät für den Testbetrieb zugelassen ist oder ob es den Sicherheitsbetrieb einnehmen soll, von Vorteil. Diese Signatur bzw. Kennung sendet die Steuerung an das Gerät bzw. die sicherheitsgerichtete Komponente und diese prüft dann, ob sie den Testbetrieb zulassen darf, ob sie den Sicherheitsbetrieb aufnehmen muss, oder ob sie in den Fail-Safe-Betrieb gehen muss.

Die Steuerung ist dann in der Lage zur prüfen ob eines oder mehrere Geräte bzw. Komponenten noch den Testbetrieb zulassen. Wenn ja zeigt sie an, dass der Automatikbetrieb noch nicht aufgenommen werden kann.

Weitere vorteilhafte Ausbildungen der Erfindung sind in den Unteransprüchen angegeben.

Im Folgenden wird die Erfindung anhand der Figuren näher beschrieben und erläutert.

Es zeigen:
- Fig 1: Inbetriebnahmemodus einer sicherheitsgerichteten Komponente,
- Fig 2: Übergang in den sicheren Automatikbetrieb einer Anlage.

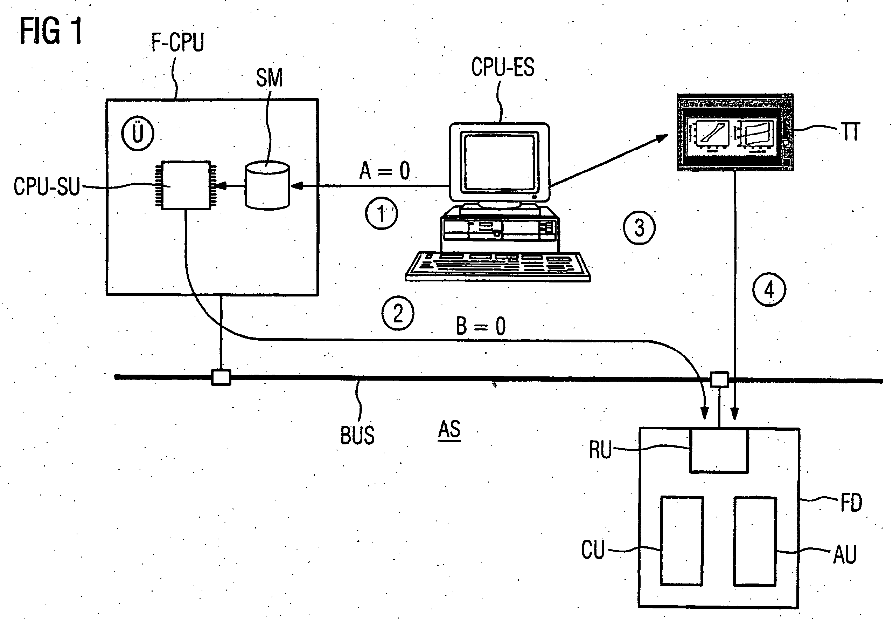

Figur 1 zeigt eine schematische Darstellung eines Teils eines Automatisierungssystem AS einer Anlage, beispielsweise einer sicherheitsgerichteten Produktionsanlage. Hierbei wird zwischen verschiedenen Automatisierungsgeräten FD, F-CPU über eine industrielle Busverbindung oder ein industrielles Ethernet BUS kommuniziert bzw. es erfolgt zwischen den Geräten ein Datenaustausch.

Bei den Automatisierungsgeräten handelt es sich im vorliegenden Beispiel um eine sicherheitsgerichtete zentrale Einheit F-CPU, beispielsweise eine speicherprogrammierbare Steuerung und eine sicherheitsgerichtete Komponente FD, beispielsweise ein Lichtgitter oder eine Schutztür. Die Steuerung F-CPU wird mittels eines Engineeringsystems CPU-ES geplant; parametriert und in Betrieb genommen. Die sicherheitsgerichtete Komponente FD wird über ein Inbetrieb- und Test-Tool TT in Betrieb genommen und parametriert.

Zum Datenaustausch verfügt die sicherheitsgerichtete Komponente FD über eine Empfangseinheit RU. Mithilfe der arithmetischen Einheit AU kann die sicherheitsgerichtete Komponente FD eine spezifische Signatur A ermitteln. Diese Signatur basiert auf den Inbetriebnahmeparametern der Komponente FD. Des Weiteren verfügt die sicherheitsgerichtete Komponente FD über Vergleichsmittel CU, welche eine erste Signatur A mit einer zweiten Signatur B vergleichen und auf Identität prüfen.

Die Steuerung F-CPU verfügt über ein Speichermodul SM zur Speicherung der an die Steuerung übermittelten ersten Signatur A. Die erste Signatur A wird in der Steuerung F-CPU als Signatur B hinterlegt und über eine Sendeeinheit SU-CPU an die sicherheitsgerichtete Komponente FD mittels des industriellen Bussystems bzw. des industriellen Ethernets BUS übertragen. Die Datenübertragung ist hierbei jedoch auch mittels einer zinkverbindung wie Wireless Lan oder einem Äquivalent denkbar.

Zur Inbetriebnahme der sicherheitsgerichteten Komponenten werden nun folgende Schritte durchgerührt:
1. Das Engirieering-Tool bzw. -System CPU-ES sendet den voreingestellten Signaturwert bzw. den vördefinierten Defaultwert an die zentrale sicherheitsgerichtete Steuerung F-CPU als Signatur A. Dort wird die Signatur A als Signatur B im Speichermodul SM gespeichert. In dem Beispiel ist der vordefinierte Defaultwert die Signatur A = B = 0. Ein anderer Wert kann jedoch auch definiert werden.
2. Der vordefinierte Defaultwert wird von der Steuerung F-CPU. beispielsweise über einen PROFIsafe-Treiber über die Kommunikationsverbindung BUS an die sicherheitsgerichtete Komponente FD übertragen.
3. Der Anwender will das sicherheitsgerichtete Gerät bzw. die Komponente FD in Betreib nehmen und/oder testen. Hierzu wird vom Engineering-Tool CPU-ES aus das Test- und Inbetriebnahme-Tool TT aufgerufen.
4. Mit Hilfe des Test- und Inbetriebnahme-Tools TT stellt der Anwender den Inbetriebnahmemodus im sicherheitsgerichteten Gerät bzw. der sicherheitsgerichtete Komponente FD ein. Er stellt dann außerdem die Parameter ein und testet das Gerät bzw. die Komponente FD.
Ü Die Steuerung F-CPU prüft zyklisch ob eine der Komponenten-Signaturen der angeschlossenen sicherheitsgerichteten Komponenten FD, von denen der Übersichtlichkeit im Beispiel nur eine dargestellt ist = 0 ist. Wenn ja darf der sichere Automatikbetrieb nicht aufgenommen werden.

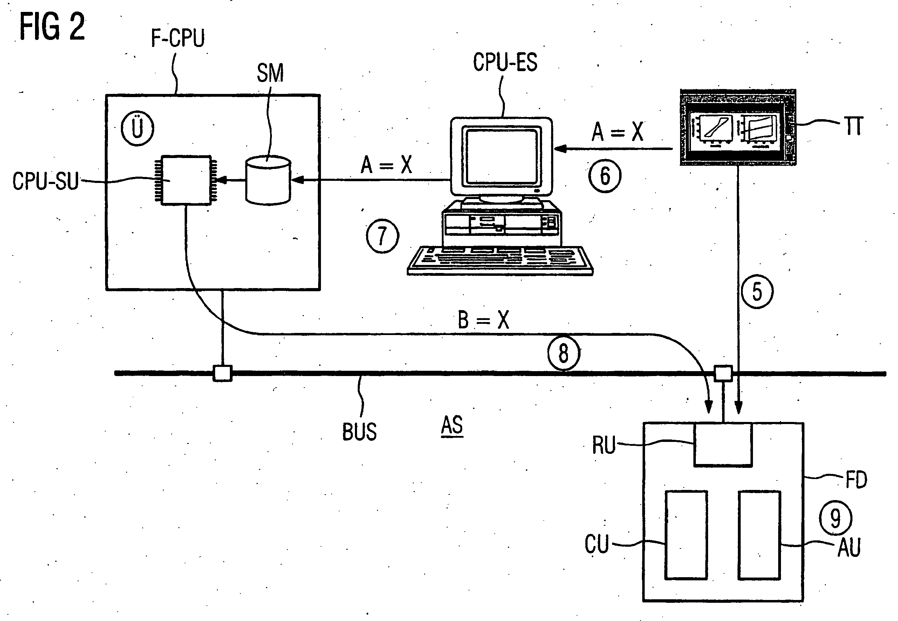

Figur 2 zeigt den Übergang der Anlage in den sicheren Automatikbetrieb. Hierbei werden folgende Schritte ausgeführt:
5. Der Anwender will das Automatisierungssystem AS der Anlage in den Automatik-Betrieb schalten. Er stellt den Testbetrieb in der sicherheitsgerichteten Komponente FD mittels des Test- und Inbetriebnahme-Tools TT wieder ab. Die sicherheitsgerichtete Komponente FD ermittelt dann auf Basis der eingestellten Parameter ihren spezifischen Signaturwert A = X.
6. Der Anwender übergibt den ersten spezifischen Signaturwert A = X der sicherheitsgerichteten Komponente FD an das Engineering-Tool CPU-ES der Steuerung F-CPU.
7. Das Engineering-Tool sendet die Signatur A = X an die Steuerung F-CPU, die sie im Speichermodul SM speichert.
8. Die Steuerung F-CPU speichert die Signatur A = X als zweite Signatur B = X ab und sendet die Signatur B = X per Sicherheitstelegramm (z.B. PROFIsafe) an die sicherheitsgerichtete Komponente FD.
9. Die sicherheitsgerichtete Komponente FD schaltet den Testbetrieb ab und prüft ob Signatur A = B. Ist dies der Fall, so geht sie in den Sicherheitsbetrieb über, wenn nicht, so schaltet sie in den Fail-Safe-Betrieb.
Ü Die zentrale Steuerung F-CPU prüft zyklisch ob eine der Komponenten-Signaturen der angeschlossenen sicherheitsgerichteten Komponenten FD, von denen der Übersichtlichkeit im Beispiel nur eine dargestellt ist = 0 ist. Wenn ja darf der sichere Automatikbetrieb nicht aufgenommen werden.

## Patentansprüche

1. Sicherheitsgerichtetes Gerät (FD) eines Automatisierungssystems (AS) mit
• mindestens einer arithmetischen Einheit (AU) zur Berechnung einer ersten, für das Gerät spezifischen Signatur (A),
• mindestens einer Empfangseinheit (RU) zum Empfang einer zweiten, in einer zentralen sicherheitsgerichteten Einheit (F-CPU) des Automatisierungssystems (AS) hinterlegten Signatur (B) und
• Vergleichsmitteln (CU) zur Überprüfung der beiden Signaturen (A, B) auf Identität,
wobei das sicherheitsgerichtete Gerät (FD) bei Identität der Signaturen (A, B) zur Aufnahme eines Sicherheitsbetriebes und bei Ungleichheit der Signaturen (A, B) zum Übergang in einen sicheren Stopp-Zustand vorgesehen ist, und wobei das Gerät über einen Inbetriebnahme- und/oder Testmodus zur Einstellung von Komponentenparametern verfügt, wobei die Komponentenparameter des Gerätes (FD) über die Empfangseinheit (RU) mittels einer Inbetriebnahme- und/oder Testanwendung (TT) sendbar sind.

2. Gerät (FD) nach Anspruch 1, wobei die Vergleichsmittel (CU) zur Ermittlung des Wertes der zweiten Signatur (B) vorgesehen sind.

3. Gerät (FD) nach Anspruch 1, wobei die Anlagenkomponente (FD) nur unter der Voraussetzung, dass die zweite Signatur (B) einen vordefinierten Defaultwert aufweist zur Einnahme des Inbetriebnahme- und/oder Testmodus vorgesehen ist.

4. Gerät (FD) nach einem der vorhergehenden Ansprüche, wobei das Gerät (FD) zur Berechnung der ersten, spezifischen Signatur (A) auf Basis der eingestellten Komponentenparameter vorgesehen ist.

5. Gerät (FD) nach einem der vorhergehenden Ansprüche, wobei das Gerät (FD) zur Berechnung der ersten, spezifischen Signatur (A) bei Empfang eines definierten Befehls durch die Inbetriebnahme- und/oder Testanwendung (TT) vorgesehen ist.

6. Gerät (FD) nach Anspruch 1, wobei das Gerät (FD) zur Übermittlung der berechneten ersten, spezifischen Signatur (A) an die Inbetriebnahme- und/oder Testanwendung (TT) vorgesehen ist.

7. Gerät (FD) nach einem der vorhergehenden Ansprüche, wobei das Gerät (FD) zur Überprüfung der beiden Signaturen (A, B) auf Identität vorgesehen ist, sobald der Wert der zweiten Signatur (B) von dem vordefinierten Defaultwert abweicht.

8. Zentrale sicherheitsgerichtete Einheit (F-CPU) eines Automatisierungssystems (AS) mit
• mindestens einem Speichermodul (SM) zur Speicherung mindestens einer, von einem sicherheitsgerichteten Gerät (FD) nach einem der Ansprüche 1 bis 7 berechneten ersten, spezifischen Signatur (A) als zweite Signatur (B) und
• mindestens einer Sendeeinheit (CPU-SU) zum senden der gespeicherten zweiten Signatur (B) an das sicherheitsgerichtete Gerät (FD), welches die spezifische erste Signatur (A) berechnet hat, wobei.die Einheit zur Speicherung eines vordefinierten Defaultwerts als erste Signatur (A) für eine Anlagenkomponente (FD) und zur Übermittlung dieses vordefinierten Werts als zweite Signatur (B) an die Anlagenkomponente (FD) vorgesehen ist, wenn die Einheit (F-CPU) für diese Anlagenkomponente (FD) noch keine berechnete erste, spezifische Signatur (A) erhalten hat.

9. Sicherheitsgerichtete Einheit (F-CPU) nach Anspruch 8, wobei die Einheit mindestens eine Empfangseinheit (RU) zum Empfang mindestens der ersten spezifischen Signatur (A) über eine Engineeringsystem (CPU-ES) aufweist.

10. Sicherheitsgerichtete Einheit (F-CPU) nach einem der Ansprüche 8 bis 9 wobei die Einheit zur zyklischen Überprüfung der ersten Signaturen (A) vorgesehen ist.

11. Sicherheitsgerichtete Einheit (F-CPU) nach einem der Ansprüche 8 bis 10, wobei die Einheit zur Aufnahme eines sicheren Automatikbetriebs einer Anlage vorgesehen ist, wenn keine erste Signatur (A) den vordefinierten Defaultwert aufweist.

12. Verfahren zum Betrieb einer sicherheitsgerichteten Anlage mittels einen Automatisierungssystems (AS), bei dem
• eine erste, spezifischen Signatur (A) durch mindestens ein sicherheitsgerichtetes Gerät (FD) berechnet wird,
• das mindestens ein sicherheitsgerichtetes Gerät (FD) eine zweite Signatur (B) von einer zentralen sicherheitsgerichteten Einheit (F-CPU) des Automatisierungssystems (AS) empfängt,
• das mindestens ein sicherheitsgerichtetes Gerät (FD) die beiden Signaturen (A, B) auf Identität überprüft bei Ungleichheit der Signaturen (A, B) in einen komponentenspezifischen sicheren Stopp-Zustand übergeht, wobei der Wert der zweiten Signatur (B) von dem Gerät (FD) ermittelt wird,
und wobei während eines Inbetriebnahme- und/oder Testmodus Komponentenparameter des Gerätes (FD) eingestellt werden und bei dem das Gerät (FD) den Inbetriebnahme- und/oder Testmodus nur unter der Voraussetzung einnimmt, dass die zweite Signatur (B) einen vordefinierten Defaultwert aufweist.

13. Verfahren nach Anspruch 12, bei dem das Gerät (FD) die erste, spezifische Signatur (A) auf Basis der eingestellten Komponentenparameter berechnet.

14. Verfahren nach einem der Ansprüche 12 bis 13, bei dem das Gerät (FD) die erste, spezifische Signatur (A) bei Empfang eines definierten Befehls von einer Inbetriebnahme- und/oder Testanwendung (TT) berechnet.

15. Verfahren nach Anspruch 13, bei dem das Gerät (FD) die berechnete erste, spezifische Signatur (A) an die Inbetriebnahme- und/oder Testanwendung (TT) übermittelt.

16. Verfahren nach einem der Ansprüche 12 bis 15, bei dem das Gerät (FD) die beiden Signaturen (A, B) auf Identität überprüft, sobald der Wert der zweiten Signatur (B) von dem vordefinierten Defaultwert abweicht.

17. Verfahren nach einem der Ansprüche 12 bis 16, bei dem
• mindestens eine, von mindestens einem sicherheitsgerichteten Gerät (FD) berechnete erste, spezifische Signatur (A) als zweite Signatur (B) in einer zentrale sicherheitsgerichteten Einheit (F-CPU) des Automatisierungssystems (AS) gespeichert wird und
• die gespeicherte zweite Signatur (B) von der zentralen sicherheitsgerichteten Einheit (F-CPU) an dem sicherheitsgerichteten Gerät (FD), die die spezifische erste Signatur (A) berechnet hat, gesendet wird.

18. Verfahren nach einem der Ansprüche 12 bis 17, bei dem die sicherheitsgerichtete Einheit (F-CPU) die erste spezifische Signatur (A) über eine Engineeringanwendung (CPU-ES) empfängt.

19. Verfahren nach einem der Ansprüche 12 bis 18, bei dem die sicherheitsgerichtete Einheit (F-CPU) den vordefinierten Defaultwert als erste Signatur (A) für ein Gerät (FD) speichert und diesen vordefinierten Defaultwert als zweite Signatur (B) an ein Gerät (FD) übermittelt, wenn die Einheit (F-CPU) für dieses Gerät (FD) noch keine berechnete erste, spezifische Signatur (A) erhalten hat.

20. Verfahren nach einem der Ansprüche 12 bis 19, bei dem die sicherheitsgerichtete Einheit (F-CPU) die ersten Signaturen (A) zyklisch überprüft.

21. Verfahren nach einem der Ansprüche 12 bis 20, bei dem die sicherheitsgerichtete Einheit (F-CPU) einen sicheren Automatikbetriebs des Automatisierungssystems (AS) aufnimmt, wenn keine erste Signatur (A) den vordefinierten Defaultwert aufweist.

## Claims

1. Security-related device (FD) of an automation system (AS) having
• at least one arithmetic unit (AU) for calculating a first signature (A) specific to the device,
• at least one receive unit (RU) for receiving a second signature (B) stored in a central security-related unit (F-CPU) of the automation system (AS) and
• comparison means (CU) for verifying if the two signatures (A, B) are identical,
wherein provision is made for the security-related device (FD) to begin a security operation if the signatures (A, B) are identical and to switch to a secure stop state if the signatures (A, B) do not match,
and wherein the device has a commissioning and/or test mode for setting component parameters, wherein the component parameters of the device (FD) can be sent via the receive unit (RU) by means of a commissioning and/or test application (TT).

2. Device (FD) according to claim 1, wherein the comparison means (CU) are provided to determine the value of the second signature (B).

3. Device (FD) according to claim 1, wherein the system component (FD) is provided only on the condition that the second signature (B) has a predefined default value for engaging the commissioning and/or test mode.

4. Device (FD) according to one of the preceding claims, wherein the device (FD) is provided to calculate the first, specific signature (A) on the basis of the component parameters set.

5. Device (FD) according to one of the preceding claims, wherein the device (FD) is provided to calculate the first, specific signature (A) upon receipt of a defined command by the commissioning and/or test application (TT).

6. Device (FD) according to claim 1, wherein the device (FD) is provided to transfer the calculated first, specific signature (A) to the commissioning and/or test application (TT).

7. Device (FD) according to one of the preceding claims, wherein the device (FD) is provided to verify if the two signatures (A, B) are identical as soon as the value of the second signature (B) deviates from the predefined default value.

8. Central security-related unit (F-CPU) of an automation system (AS) having
• at least one storage module (SM) for storing at least one first, specific signature (A) calculated by a security-related device (FD) according to one of claims 1 to 7 as a second signature (B) and
• at least one transmit unit (CPU-SU) for sending the stored second signature (B) to the security-related device (FD), which has calculated the specific, first signature (A), wherein the unit is provided to store a predefined default value as a first signature (A) for a system component (FD) and to transfer this predefined value as a second signature (B) to the system component (FD), if the unit (F-CPU) has not yet received a calculated first, specific signature (A) for this system component (FD)

9. Security-related unit (F-CPU) according to claim 8, wherein the unit has at least one receive unit (RU) for receiving at least the first, specific signature (A) by way of an engineering system (CPU-ES).

10. Security-related unit (F-CPU) according to one of claims 8 to 9, wherein the unit is provided to cyclically verify the first signatures (A).

11. Security-related unit (F-CPU) according to one of claims 8 to 10, wherein the unit is provided to begin a secure automatic operation of a system, if no first signature (A) has the predefined default value.

12. Method for operating a security-related system by means of an automation system (AS), in which
• a first, specific signature (A) is calculated by at least one security-related device (FD),
• the at least one security-related device (FD) receives a second signature (B) from a central security-related unit (F-CPU) of the automation system (AS),
• the at least one security-related device (FD) verifies if the two signatures (A, B) are identical and if the signatures (A, B) do not match, switches into a component-specific secure stop state, wherein the value of the second signature (B) is determined by the device (FD),
and wherein
during a commissioning and/or test mode, component parameters of the device (FD) are set and with which the device (FD) engages the commissioning and/or test mode only on the condition that the second signature (B) has a predefined default value.

13. Method according to claim 12, in which the device (FD) calculates the first, specific signature (A) on the basis of the component parameters set.

14. Method according to one of claims 12 to 13, in which the device (FD) calculates the first, specific signature (A) upon receipt of a defined command from a commissioning and/or test application (TT).

15. Method according to claim 13, in which the device (FD) transfers the calculated first, specific signature (A) to the commissioning and/or test application (TT).

16. Method according to one of claims 12 to 15, in which the device (FD) verifies if the two signatures (A, B) are identical as soon as the value of the second signature (B) deviates from the predefined default value.

17. Method according to one of claims 12 to 16, in which
• at least one first, specific signature (A) calculated by at least one security-related device (FD) is stored as a second signature (B) in a central security-related unit (F-CPU) of the automation system (AS) and
• the stored second signature (B) is sent from the central security-related unit (F-CPU) to the security-related device (FD), which has calculated the specific, first signature (A).

18. Method according to one of claims 12 to 17, in which the security-related unit (F-CPU) receives the first, specific signature (A) by way of an engineering application (CPU-ES).

19. Method according to one of claims 12 to 18, in which the security-related unit (F-CPU) stores the predefined default value as a first signature (A) for a device (FD) and transfers this predefined default value as a second signature (B) to a device (FD), if the unit (F-CPU) for this device (FD) has not yet received a calculated first, specific signature (A).

20. Method according to one of claims 12 to 19, in which the security-related unit (F-CPU) cyclically verifies the first signatures (A).

21. Method according to one of claims 12 to 20, in which the security-related unit (F-CPU) begins a secure automatic operation of the automation system (AS), if no first signature (A) has the predefined default value.

## Revendications

1. Appareil (FD) sécurisé d'un système (AS) d'automatisation comprenant
• au moins une unité (AU) arithmétique de calcul d'une première signature (A) spécifique à l'appareil,
• au moins une unité (RU) de réception d'une deuxième signature (B) mémorisée dans une unité (F-CPU) centrale sécurisée du système (AS) d'automatisation et
• des moyens (CU) de comparaison pour vérifier que les deux signatures (A, B) sont identiques,
dans lequel l'appareil (FD) sécurisé est prévu pour, si les signatures (A, B) sont identiques, enregistrer un fonctionnement sécurisé et, si les signatures (A, B) ne sont pas pareilles, pour passer dans un état d'arrêt sécurisé et dans lequel l'appareil dispose d'un mode de mise en fonctionnement et/ou de test pour le réglage de paramètres de composant, les paramètres de composant de l'appareil (FD) pouvant être envoyés par l'unité (RU) de réception au moyen d'une application (TT) de mise en fonctionnement et/ou de test.

2. Appareil (FD) suivant la revendication 1, dans lequel les moyens (CU) de comparaison sont prévus pour déterminer la valeur de la deuxième signature (B).

3. Appareil (FD) suivant la revendication 1, dans lequel le composant (FD) d'installation est prévu pour prendre le mode de mise en service et/ou de test seulement à la condition que la deuxième signature (B) ait une valeur de défaut définie à l'avance.

4. Appareil (FD) suivant l'une des revendications précédentes, dans lequel l'appareil (FD) est prévu pour calculer la première signature (A) spécifique sur la base des paramètres de composant réglés.

5. Appareil (FD) suivant l'une des revendications précédentes, dans lequel l'appareil (FD) est prévu pour calculer la première signature (A) spécifique à la réception d'une instruction définie par l'application (TT) de mise en fonctionnement et/ou de test.

6. Appareil (FD) suivant la revendication 1, dans lequel l'appareil (FD) est prévu pour la transmission de la première signature (A) spécifique calculée à l'application (TT) de mise en service et/ou de test.

7. Appareil (FD) suivant l'une des revendications précédentes, dans lequel l'appareil (FD) est prévu pour vérifier que les deux signatures (A, B) sont identiques dès que la valeur de la deuxième signature (B) s'écarte de la valeur de défaut définie à l'avance.

8. Unité (F-CPU) centrale sécurisée d'un système (AS) d'automatisation comprenant
• au moins un module (SM) de mémoire pour la mémorisation comme deuxième signature (B) d'une première signature (A) spécifique calculée par un appareil (FD) sécurisé suivant l'une des revendications 1 à 7 et
• au moins une unité (SPU-SU) d'émission pour envoyer la deuxième signature (B) mémorisée à l'appareil (FD) sécurisé qui a calculé la première signature (A) spécifique, l'unité de mémorisation étant prévue pour mémoriser une valeur de défaut définie à l'avance comme première signature (A) pour un composant (FD) d'installation et pour transmettre cette valeur définie à l'avance comme deuxième signature (B) au composant (FD) d'installation si l'unité (F-CPU) n'a pas encore obtenu pour ce composant (FD) d'installation de première signature (A) spécifique calculée.

9. Unité (F-CPU) sécurisée suivant la revendication 8, dans laquelle l'unité a au moins une unité (RU) de réception d'au moins la première signature (A) spécifique par l'intermédiaire d'un système (CPU-ES) d'ingénierie.

10. Unité (F-CPU) sécurisée suivant l'une des revendications 8 à 9, dans laquelle l'unité est prévue pour la vérification cyclique des premières signatures (A).

11. Unité (F-CPU) sécurisée suivant l'une des revendications 8 à 10, dans laquelle l'unité est prévue pour l'enregistrement d'un fonctionnement automatique sécurisé d'une installation si aucune première signature (A) n'a la valeur de défaut définie à l'avance.

12. Procédé pour faire fonctionner une installation sécurisée au moyen d'un système (AS) d'automatisation, dans lequel
• on calcule une première signature (AS) spécifique par au moins un appareil (FD) sécurisé,
• le au moins un appareil (FD) sécurisé reçoit une deuxième signature (B) d'une unité (F-CPU) centrale sécurisée du système (AS) d'automatisation,
• le au moins un appareil (FD) sécurisé vérifie que les deux signatures (A, B) sont identiques et, si les signatures (A, B) ne sont pas pareilles, transmet un état d'arrêt sécurisé spécifique au composant, la valeur de la deuxième signature (B) étant déterminée par l'appareil (FD).
et dans lequel on règle, pendant un mode de mise en fonctionnement et/ou de test, des paramètres de composant de l'appareil (FD) et dans lequel l'appareil (FD) prend le mode de fonctionnement et/ou le mode de test à la condition que la deuxième signature (B) ait une valeur de défaut définie à l'avance.

13. Procédé suivant la revendication 12, dans lequel l'appareil (FD) calcule la première signature (A) spécifique sur la base des paramètres de composant réglés.

14. Procédé suivant l'une des revendications 12 à 13, dans lequel l'appareil (FD) calcule la première signature (A) spécifique à la réception d'une instruction définie par une application (TT) de mise en fonctionnement et/ou de test.

15. Procédé suivant la revendication 13, dans lequel l'appareil (FD) transmet la première signature (A) spécifique calculée à l'application (TT) de mise en fonctionnement et/ou de test.

16. Procédé suivant l'une des revendications 12 à 15, dans lequel l'appareil (FD) vérifie que les deux signatures (A, B) sont identiques dès que la valeur de la deuxième signature (B) s'écarte de la valeur de défaut définie à l'avance.

17. Procédé suivant l'une des revendications 12 à 16, dans lequel
• on mémorise comme deuxième signature (B) dans une unité (F-CPU) centrale sécurisée du système (AS) d'automatisation au moins une première signature (A) spécifique calculée par au moins un appareil (FD) sécurisé et
• on envoie la deuxième signature (B) mémorisée par l'unité (F-CPU) centrale sécurisée à l'appareil (FD) sécurisé, qui a calculé la première signature (A) spécifique.

18. Procédé suivant l'une des revendications 12 à 17, dans lequel l'unité (F-CPU) sécurisée reçoit la première signature (A) spécifique par une application (CPU-ES) d'ingénierie.

19. Procédé suivant l'une des revendications 12 à 18, dans lequel l'unité (F-CPU) sécurisée mémorise la valeur de défaut définie à l'avance comme première signature (A) pour un appareil (FD) et transmet cette valeur de défaut définie à l'avance comme deuxième signature (B) à un appareil (FD) si l'unité (F-CPU) n'a, pour cet appareil (FD), pas encore reçu de première signature (A) spécifique calculée.

20. Procédé suivant l'une des revendications 12 à 19, dans lequel l'unité (F-CPU) sécurisée vérifie cycliquement les premières signatures (A).

21. Procédé suivant l'une des revendications 12 à 20, dans lequel l'unité (F-CPU) sécurisée enregistre un fonctionnement automatique sécurisé du système (AS) d'automatisation si aucune première signature (A) n'a la valeur de défaut définie à l'avance.
